# EUROPEAN PATENT APPLICATION

(11) **EP 4 478 527 A1**
(43) Date of publication of application: **18.12.2024**
(21) Application number: 22963098.3
(22) Date of filing: 27.10.2022
(51) Int. Cl.: H01M 50/609, H01M 50/627, H01M 10/058

(54) **BATTERY CELL, BATTERY, AND ELECTRICAL APPARATUS**

(71) Applicant: Contemporary Amperex Technology Co., Limited, Ningde, Fujian 352100 (CN)
(72) Inventor: WU, Kai, Ningde, Fujian 352100 (CN); SHI, Xuanyan, Ningde, Fujian 352100 (CN); ZHANG, Tingting, Ningde, Fujian 352100 (CN); QU, Fei, Ningde, Fujian 352100 (CN)
(74) Representative: Ziebig Hengelhaupt Intellectual Property Attorneys Patentanwaltskanzlei PartGmbB
(86) International application number: PCT/CN2022/128047
(87) International publication number: WO 2024/087114

(57) **Abstract**

The present disclosure provides a battery cell, a battery, and an electric device. The battery cell includes an electrode assembly (30), an end cover assembly (40), and a shielding assembly (50). The end cover assembly (40) includes an end cover (41). The end cover (41) has a liquid injection hole (411). The shielding assembly (50) is configured to cover the liquid injection hole (411). By providing the shield assembly (50) to cover the liquid injection hole (411), when an electrolyte is injected, the shielding assembly (50) can withstand an impact force of the injected electrolyte. Therefore, the electrolyte is prevented from directly washing over the electrode assembly (30). Thus, a separator can be prevented from folding over due to the washing over of the electrolyte.

## Description

### FIELD

The present disclosure relates to the field of battery technologies, and more particularly, to a battery cell, a battery, and an electric device.

### BACKGROUND

Energy conservation and emission reduction are crucial for the sustainable development of the automobile industry, and electric vehicles have become an important integral part of the sustainable development of the automobile industry due to their energy-saving and environmentally friendly advantages. For electric vehicles, a battery technology is an important factor that affects their development.

During production of battery cells, after an electrode assembly is mounted into a housing, an electrolyte needs to be injected through a liquid injection hole defined at an end cover. However, during an injection of the electrolyte, the electrolyte can impact the electrode assembly, causing a separator to folding over. Consequently, an electrode plate is exposed, leading to overlapping between a tab and an end surface of the electrode plate, thereby causing a self-discharge problem.

### SUMMARY

An object of embodiments of the present disclosure is to provide a battery cell, a battery, and an electric device, aiming to solve a problem of folding over of a separator caused by an electrolyte impacting on an electrode assembly when injecting electrolyte in the related art.

In a first aspect, embodiments of the present disclosure provide a battery cell. The battery cell includes an electrode assembly, an end cover assembly, and a shielding assembly. The end cover assembly includes an end cover. The end cover has a liquid injection hole. The shielding assembly is disposed at a side of the end cover facing towards the electrode assembly and configured to cover the liquid injection hole.

In the technical solution of the embodiments of the present disclosure, the shielding assembly is provided to cover the liquid injection hole at the end cover. When the electrolyte is injected from the liquid injection hole, the electrolyte directly impacts on the shielding assembly to allow the shielding assembly to withstand an impact force of the injected electrolyte and serve a function in dispersing and buffering the injected electrolyte. Therefore, the electrolyte is prevented from directly washing over the electrode assembly. Thus, the separator can be prevented from folding over due to the washing over of the electrolyte. In this way, a risk of self-discharge due to overlapping between a tab and an end surface of an electrode plate is reduced. As a result, safety is improved and a service life is prolonged.

In some embodiments, the shielding assembly is adhesively connected to the end cover to allow an electrolyte injected from the liquid injection hole to impact on a part of the shielding assembly, in such a manner that the part is detached from the end cover.

The shielding assembly is adhesively connected to the end cover to facilitate mounting of the shielding assembly to ensure that the shielding assembly covers the liquid injection hole during assembly. Moreover, when the electrolyte is injected, the impact force of the electrolyte can separate the shielding assembly from a part of a connection region between the shielding assembly and the end cover to facilitate the injection of the electrolyte.

In some embodiments, the shielding assembly includes a shielding member covering the liquid injection hole and a buffer member supporting the shielding member. The buffer member is connected to the electrode assembly. The shielding member is provided to shield the liquid injection hole, and the buffer member is provided to support the shielding member. When the electrolyte is injected, the shielding member withstands the impact force of the electrolyte and the buffer member supports the shielding member. In this way, an ability of the shielding member to withstand the impact force of the electrolyte can be enhanced to better dispersing the electrolyte, and to facilitate the injection of the electrolyte.

In some embodiments, the buffer member is elastic. Therefore, the buffer member can elastically support the shielding member and can serve a function in elastically buffering the shielding member when the electrolyte impacts on the shielding member, to allow the shielding member better dispersing the electrolyte, and to facilitate the injection of the electrolyte.

In some embodiments, the shielding member has a sheet-like structure. Use of the sheet-like structure takes up little space, can enhance capacity density of the battery cell, and facilitates the mounting. In addition, the shielding member having the sheet-like structure is provided to facilitate the shielding member being adhesively connected to the end cover, to shield the liquid injection hole. In this way, when the electrolyte is injected, the electrolyte can better impact on the part of the adhesive connection region between the shielding member and the end cover, and to avoid disengagement of the shielding member.

In some embodiments, the shielding member is elastic. When the electrolyte impacts on the shielding member, the shielding member can serve the elastically buffering function to better disperse the electrolyte and to facilitate the injection of the electrolyte.

In some embodiments, the buffer member is disposed at each of two opposite ends of the shielding member in a width direction of the end cover. The buffer member and the shielding member are integrally formed into a sheet-like structure.

The buffer members are provided at the two opposite ends of the shielding member to more stably support the shielding member, respectively. Moreover, the buffer member is provided as a sheet-like structure, and the buffer member and the shielding member are integrally formed, which facilitates processing and production, reduces cost, and also facilitates the fitting.

In some embodiments, the buffer member is bent to be connected to the electrode assembly. By bending the buffer member at each of the two ends of the shielding member to be connected to the electrode assembly not only can protect the electrode assembly, but also can sever a function in elastically supporting the shielding member. As such, the shielding member can better disperse the electrolyte, which prevents the electrolyte from washing over the electrode assembly when the electrolyte is injected.

In some embodiments, the battery cell includes a plurality of electrode assemblies divided into two groups. The buffer member is bent to be connected to each of two electrode assemblies adjacent to the liquid injection hole. The plurality of electrode assemblies is provided and may be integrated when fabricating the battery cell, and the plurality of electrode assemblies is divided into two groups to facilitate the assembly. By bending the buffer members at the two ends of the shielding member to be connected to the two electrode assemblies adjacent to the liquid injection hole can serve the function in elastically supporting the shielding member. As such, the shielding member can better disperse the electrolyte, which prevents the electrolyte from washing over the electrode assembly when the electrolyte is injected.

In some embodiments, the shielding assembly has a length L. L satisfies: 2mm≤L1+1.5*H-L≤6mm, where L1 represents a spacing between the two groups of electrode assemblies that are unfolded at a same height and parallel to a side edge of the end cover, and H represents a thickness of the electrode assembly. This length specification of the shielding assembly ensures that the two ends of the shielding assembly can be connected to the two electrode assemblies adjacent to the liquid injection holes, respectively, and cannot allow the two ends of the shielding assembly to exceed the two side surfaces of corresponding electrode assemblies, respectively. In this way, after the two groups of electrode assemblies are stacked to each other, interference at the two ends of the shielding assembly can be avoided.

In some embodiments, the shielding assembly has a first side edge and a second side edge opposite to the first side edge in a length direction of the end cover. The first side edge and the second side edge are located at two opposite sides of the liquid injection hole, respectively. A distance from the first side edge to the liquid injection hole is smaller than or equal to a distance from the second side edge to the liquid injection hole. The distance from the first side edge to the liquid injection hole is d, where 0<d<20mm. Setting the interference distance d from one side edge of the shielding assembly to the liquid injection hole can enhance buffering capacity of the shielding assembly against the injected electrolyte, better disperse the electrolyte, and avoid the electrolyte directly washing over the electrode assembly.

In some embodiments, the electrode assembly is provided with tabs having opposite polarities. The second side edge of the shielding assembly is attached to one of the tabs adjacent to the second side edge, and the first side edge of the shielding assembly is spaced apart from another one of the tabs. In this way, resistance of the injected electrolyte to break open the shielding assembly to reach an adjacent tab is greater, to reduce an impact force of the electrolyte on the tab, and thus to better prevent the separator from folding over due to the washing over of the electrolyte when the electrolyte reaching the tab flows along the tab to the electrode assembly.

In some embodiments, the end cover has a flow guide groove defined at a surface of the end cover facing towards the shielding assembly. The flow guide groove has an end in communication with the liquid injection hole, and the shielding assembly covers at least a part of the flow guide groove.

By providing the guide groove, when the electrolyte is injected, after the shielding assembly buffers the electrolyte, the electrolyte can enter the flow guide groove more easily. The electrolyte is guided and dispersed to a predetermined position through the flow guide groove, which facilitates the injection of the electrolyte and avoids the electrolyte from washing over the electrode assembly.

In some embodiments, the flow guide groove includes a first flow guide groove. The first flow guide groove has an end in communication with the liquid injection hole and another end extending out of a side of the shielding assembly in a length direction of the end cover. By providing the first guide groove, when the electrolyte is injected, more electrolyte can be guided to flow out of a side facing away from an adjacent tab to facilitate the injection of the electrolyte and reduce an influence on the adjacent tab.

In some embodiments, the flow guide groove includes a second flow guide groove. The second flow guide groove has an end in communication with the liquid injection hole, and another end adjacent to a side edge of the end cover in a width direction of the end cover or another end extending to the side edge of the end cover in the width direction. By providing the second guide groove, when the electrolyte is injected, the electrolyte can be guided to flow to the side edge of the end cover to disperse the electrolyte, which facilitates the injection of the electrolyte and more uniform absorption of the electrolyte by the electrode assembly.

In some embodiments, the electrode assembly is provided with tabs having opposite polarities. The end cover assembly further includes electrode terminals connected to the tabs having the opposite polarities, respectively. The electrode terminals are mounted at the end cover. The battery cell further includes adapter sheets connected to the electrode terminals, respectively. Each of the adapter sheets is connected to a corresponding one of the tabs. A connection region between each of the tabs and the corresponding adapter sheet being covered with an insulation sheet.

The adapter sheet is provided and the tab is connected to the corresponding electrode terminal by the adapter sheet, and therefore the connection between the tab and the electrode terminal is facilitated, and the connection is more stable. Moreover, the connection region between the tab and the corresponding adapter sheet is covered with the insulation sheet, and therefore the connection between the tab and the adapter sheet can be protected. In addition, the connection between the tab and the adapter sheet can be prevented from affecting the electrode assembly. Thus, safety of fabricating the battery is enhanced.

In some embodiments, the end cover assembly further includes a separation member supporting the end cover. The shielding assembly is spaced apart from the separation member. The separation member is provided to better support the end cover and improve the safety of fabricating the battery. Moreover, the side edge of the shielding assembly is spaced apart from the separation member, and therefore, when the electrode assembly is mounted, the separation member can be avoided from pushing the shielding assembly up to allow the shielding assembly to be well attached to the end cover.

In some embodiments, a distance between a side edge of the shielding assembly and an end of the separation member close to the shielding assembly is greater than 3 mm. Therefore, when the electrode assembly is mounted, it can be ensured that the separation member cannot push the shielding assembly up to allow the shielding assembly to be well attached to the end cover.

In a second aspect, embodiments of the present disclosure provide a battery. The battery includes the battery cell as described in the above embodiments.

In a third aspect, embodiments of the present disclosure provide an electric device. The electric device includes the battery as described in the above embodiments.

The above description is only an overview of the technical solutions of the present disclosure. In order to have a clearer understanding of the technical means of the present disclosure, the technical solutions can be implemented in accordance with the contents of the specification. Moreover, in order to make the above and other purposes, features and advantages of the present disclosure more obvious and easy to understand, specific embodiments of the present disclosure are given below.

### BRIEF DESCRIPTION OF THE DRAWINGS

In order to clearly explain technical solutions of embodiments of the present disclosure, drawings used in description of the embodiments or exemplary techniques will be briefly described below. Obviously, the drawings described below merely illustrate some embodiments of the present disclosure. Based on these drawings, other drawings can be obtained by those skilled in the art without creative effort.
FIG. 1 is a schematic structural view of a vehicle according to some embodiments of the present disclosure.
FIG. 2 is a schematic view of an exploded structure of a battery according to some embodiments of the present disclosure.
FIG. 3 is a schematic view of an exploded structure of a battery cell according to some embodiments of the present disclosure.
FIG. 4 is a schematic structural view of a battery cell before cell stacking according to some embodiments of the present disclosure.
FIG. 5 is a side view of the structure of the battery cell in FIG. 4 before cell stacking.
FIG. 6 is a side view of the structure of the battery cell in FIG. 4 after cell stacking.
FIG. 7 is a side view of a structure of a battery cell after cell stacking according to some embodiments of the present disclosure.
FIG. 8 is a schematic structural view of a battery cell before cell stacking according to some embodiments of the present disclosure.
FIG. 9 is a schematic structural view of a battery cell before cell stacking according to some embodiments of the present disclosure.
FIG. 10 is a schematic structural view of a battery cell before cell stacking according to some embodiments of the present disclosure.
FIG. 11 is a schematic structural view of a battery cell before cell stacking according to some embodiments of the present disclosure.
FIG. 12 is a schematic structural view of a battery cell before cell stacking according to some embodiments of the present disclosure.
FIG. 13 is a schematic structural view of a battery cell before cell stacking according to some embodiments of the present disclosure.
FIG. 14 is a schematic structural view of an electrode assembly in a battery cell according to some embodiments of the present disclosure.
FIG. 15 is a schematic structural view of an electrode assembly in a battery cell according to some embodiments of the present disclosure.
FIG. 16 is a schematic structural view of an electrode assembly in a battery cell according to some embodiments of the present disclosure.
FIG. 17 is a side view of a structure of a battery cell after cell stacking according to some embodiments of the present disclosure.
FIG. 18 is a side view of a structure of a battery cell according to some embodiments of the present disclosure.

### Primary reference numerals:

1000-vehicle; 1001-battery; 1002-controller; 1003-motor;
100-case body; 101-first part;102-second part;
200-battery cell;
30-electrode assembly; 301-first end; 302-second end; 31-tab; 311-first tab; 312-second tab;
40-end cover assembly; 41-end cover; 411-liquid injection hole; 412-flow guide groove; 4121-first flow guide groove; 4122-second flow guide groove; 4123-third flow guide groove; 42-electrode terminal; 421-first electrode terminal; 422-second electrode terminal; 43-adapter sheet; 431-first adapter sheet; 432-second adapter sheet; 44-separation member; 45-insulation sheet;
50-shielding assembly; 51- shielding member; 511-first side edge; 512-second side edge; 52-buffer member;
61-insulation adhesive tape; 611-open pore; and
70-housing.

### DETAILED DESCRIPTION

In order to make technical problems, technical solutions and beneficial effects to be solved in the present disclosure more apparent, the present disclosure will be described in detail below with reference to the accompanying drawings and the embodiments. It should be understood that, the specific embodiments described herein are only used to explain the present disclosure rather than to limit the present disclosure.

Unless otherwise defined, all technical and scientific terms used herein have the same meaning as commonly understood by those skilled in the art of the present disclosure. Terms in the specification of the present disclosure herein are only used for the purpose of describing specific embodiments, and are not intended to limit the present disclosure. In addition, the terms "including" and "having" and any variants thereof as used in the description of the embodiments of the present disclosure, the appended claims, and the above accompanying drawings are intended to cover non-exclusive inclusions.

In the description of the embodiments of the present disclosure, technical terms "first", "second", etc. are only used to distinguish different objects, and cannot be understood as indicating or implying relative importance or implicitly indicating the number of indicated technical features, a specific order or an priority relationship. Therefore, features defined as "first" and "second" may explicitly or implicitly include one or more of such features.

Reference herein to "an embodiment" means that a particular feature, structure or characteristic described in combination with the embodiment can be included in at least one embodiment of the present disclosure. The appearance of this phrase in various places in the specification are not necessarily all referring to the same embodiment, nor is it an independent or alternative embodiment that is mutually exclusive of other embodiments. Those skilled in the art understand, both explicitly and implicitly, that the embodiments described herein may be combined with other embodiments in any suitable manner.

In the description of the embodiments of the present disclosure, terms "and/or" describes an association relationship between correlated objects, including three relationships. For example, "A and/or B" can mean A only, B only, or both A and B. The symbol "/" in the present disclosure generally indicates an "or" relationship between the correlated objects preceding and succeeding the symbol.

In the description of the embodiments of the present disclosure, "plurality of" means two or more (including two), unless otherwise specifically indicated. Likewise, "a plurality of groups" means two or more than two groups (including two groups), and "a plurality of pieces" means two or more than two pieces (including two pieces). "A number of" means one or more, unless otherwise specifically indicated.

In the description of the embodiments of the present disclosure, technical terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In the description of the embodiments of the present disclosure, unless specified or limited otherwise, the technical terms "mounted," "connected," "coupled" and "fixed" are understood broadly, such as a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

In the description of the embodiments of the present disclosure, unless specified or limited otherwise, when an element is referred to as being "fixed to" or "disposed at" another element, it can be directly at the other element or indirectly at the other element. When an element is referred to as being "connected to" another element, it can be directly connected to the other element or indirectly connected to the other element.

In the description of the embodiments of the present disclosure, unless specified or limited otherwise, the technical term "adjacent" refers to positional proximity. For example, there are three components A₁, A₂ and B, if a distance between A₁ and B is greater than a distance between A₂ and B, then A₂ is closer to B than A₁. That is, A₂ is adjacent to B. It can also be said that B is adjacent to A₂. For another example, when there is a plurality of C components, which are C₁, C₂... C_{N}, respectively, and if one of the C components, such as the C₂, is closer to the B component than other C components, then B is adjacent to C₂, and it can also be said that C₂ is adjacent to B.

The battery cell in the present disclosure may include a lithium ion secondary battery, a lithium ion primary battery, a lithium sulfur battery, a sodium lithium ion battery, a sodium ion battery or a magnesium ion battery, etc., which are not limited in the embodiments of the present disclosure. The battery cell may be in a shape of a cylinder, a flat body, a cuboid shape or other shapes, which are not limited in the embodiments of the present disclosure. The battery cell is generally divided into three types based on a packaging method: a cylinder-shaped battery cell, a square-shaped battery cell and a soft-pack battery cell, which are not limited in the embodiment of the present disclosure.

The battery mentioned in the embodiments of the present disclosure refers to a single physical module including one or more battery cells to provide a higher voltage and capacity. For example, the battery mentioned in the present disclosure may include a battery module or a battery pack. The battery generally includes a case body for packaging one or more battery cells. The case body can prevent liquid or other foreign matter from affecting charging or discharging of the battery cell.

In the battery, when a plurality of battery cells is provided, the plurality of battery cells may be connected in series, in parallel, or in series and parallel. The expression "in series and parallel" means that the plurality of battery cells is connected both in series and in parallel. The plurality of battery cells may be directly connected in series, in parallel, or in series and parallel, and then a whole composed of the plurality of battery cells may be accommodated in the case body. Of course, the battery may also be in a form where the plurality of battery cells is first connected in series or in parallel or in series and parallel to compose a battery module, the plurality of battery modules is then connected in series or in parallel or in series and parallel to form a whole, and the whole is accommodated in the case body. The battery may also include other structures. For example, the battery may further include a current collecting component configured to implement an electrical connection between a plurality of battery cells.

The battery cell in the embodiment of the present disclosure includes an electrode assembly, an end cover and a housing.

The electrode assembly is also called a bare cell. The electrode assembly consists of a positive electrode plate, a negative electrode plate and a separator. Operation of the electrode assembly primarily relies on a movement of metallic ions between the positive and negative electrode plates. The positive electrode plate includes a positive electrode current collector and a positive electrode active material layer. The positive electrode active material layer is coated at a surface of the positive electrode current collector. A part of the positive electrode current collector that is not coated with the positive electrode active material layer protrudes from a part that has been coated with the positive electrode active material layer. The part that is not coated with the positive active material layer serves as a positive electrode tab, or a metal conductor is welded at the positive electrode current collector and led out to serve as a positive electrode tab. A lithium-ion battery is taken as an example, a material of the positive electrode current collector may be aluminum, and a positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated at a surface of the negative electrode current collector. A part of the negative electrode current collector that is not coated with the negative electrode active material layer protrudes from a part that has been coated with the negative electrode active material layer. The part that is not coated with the negative electrode active material layer serves as a negative electrode tab, or a metallic conductor is welded at the negative electrode current collector and led out to serve as a negative electrode tab. A material of the negative electrode current collector may be copper, and a negative electrode active material may be carbon, silicon, etc. For ensuring no fusing during passing through a high current, a number of positive electrode tabs is a plurality and stacked together, and a number of negative electrode tabs is a plurality and stacked together. It can be understood that in the electrode assembly, one positive electrode tab may be provided, and one negative electrode tab may also be provided. That is, the electrode assembly is provided with two groups of tabs, each of the two groups includes at least one tab, and one group of tabs are the positive electrode tabs, and the other group of tabs are the negative electrode tabs.

The electrode assembly may have a winding structure or a laminated structure, and the embodiments of the present disclosure are not limited thereto. The winding structure is mostly formed in such a manner that the tab is welded to the current collector, and then the positive electrode plate, the separator, the negative electrode plate, and the separator are arranged in an order of the positive electrode plate-the separator-the negative electrode plate-the separator and then wound to form a cylinder-shaped or square-shaped battery cell. The laminated structure is mostly formed in such a manner that the tab is led out at the current collector, and the positive electrode plate, the separator, the negative electrode plate, and the separator are arranged in the order of the positive electrode plate-the separator-the negative electrode plate-the separator and stacked together layer by layer to form the laminated battery cell. The separator may be cut and stacked directly with separator sheets, or instead of being cut, the separator may be folded to be stacked in a Z shape folding sheet without cutting it. A material of the separator may be PP (Polypropylene) or PE (Polyethylene), etc. The separator is an insulation film disposed between the positive and negative electrode plates. Its primary function is to isolate the positive and negative electrodes and prevent electrons in the battery from passing through freely to prevent a short circuit, and to allow ions in the electrolyte to freely pass between the positive and negative electrodes to form a circuit between the positive and negative electrodes. The positive electrode plate and the negative electrode plate are collectively called electrode plates. The positive electrode tab and the negative electrode tab are collectively called tabs.

After the electrode assembly is made, the electrode assembly needs to be fitted into the housing and the electrolyte is injected to allow the electrode assembly to be immersed in the electrolyte, and therefore the electrode assembly can fully absorb the electrolyte. However, when the electrolyte is injected, there will be a certain impact force. As such, when the electrolyte impacts on the electrode assembly, it will cause the separator to fold over, and the electrode plate is thus exposed, leading to overlapping between the tab and an end surface of the electrode plate, thereby causing self-discharge. This self-discharge will not only consume electric energy, but may even cause a risk of the short circuit within the battery, affecting performance and a service life of the battery.

Based on the above considerations, in order to solve a problem of folding over of the separator caused by the electrolyte washing over the electrode assembly in the process of injecting the electrolyte, embodiments of the present disclosure provide a battery cell. By the shielding assembly covering the liquid injection hole at the end cover, when the electrolyte is injected from the liquid injection hole, the shielding assembly will withstand the impact force of the injected electrolyte and serve the function in dispersing and buffering the injected electrolyte. Therefore, the electrolyte is prevented from directly washing over the electrode assembly. Thus, the separator can be prevented from folding over due to the washing over of the electrolyte. As a result, the performance and the service life of the battery are improved.

The battery cell disclosed in the embodiments of the present disclosure can be used in an electric device that uses the battery as a power supply or in various energy storage systems that use the battery as an energy storage element, such as in energy storage power supply systems such as hydraulic, thermal, wind, and solar power stations. The electric device can be, but are not limited to, a mobile phone, a tablet, a laptop, an electric toy, an electric tool, an electric bicycle, an electric motorcycle, an electric car, a ship, a spacecraft, etc. The electric toy can include a fixed or mobile electric toy, such as a game console, an electric car toy, an electric ship toy, an electric airplane toy, etc. The spacecraft can include an airplane, a rocket, a space shuttle, a spaceship, etc.

For convenience of explanation, an embodiment of the present disclosure provides an electric device. The electric device is described using a vehicle as an example.

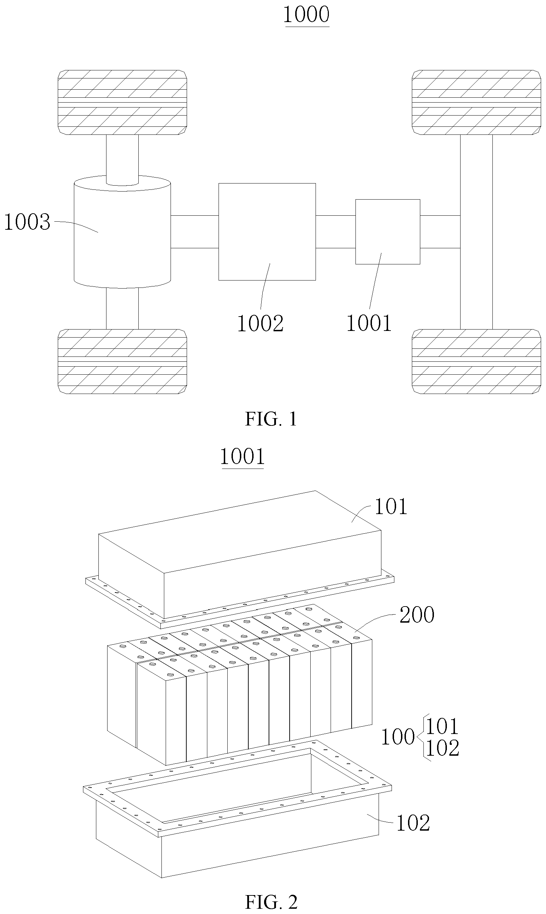

With reference to FIG. 1, FIG. 1 is a schematic structural view of a vehicle 1000 according to some embodiments of the present disclosure. The vehicle 1000 may be a fuel vehicle, a gas vehicle or a new energy vehicle. The new energy vehicle may be a pure electric vehicle, a hybrid vehicle or an extended-range vehicle, etc. The vehicle 1000 is provided with a battery 1001 internally. The battery 1001 may be disposed at a bottom, a head, or a tail of the vehicle 1000. The battery 1001 may be configured to supply power to the vehicle 1000. For example, the battery 1001 may serve as an operating power source for the vehicle 1000. The vehicle 1000 may also include a controller 1002 and a motor 1003. The controller 1002 is configured to control the battery 1001 to supply power to the motor 1003, for example, to meet operational power consumption requirements for starting, navigation and driving of the vehicle 1000.

In some embodiments of the present disclosure, the battery 1001 can not only serve as an operating power supply of the vehicle 1000, but also can serve as a drive power supply of the vehicle 1000 to replace or partially replace fuel or natural gas to provide driving power for the vehicle 1000.

With reference to FIG. 2, FIG. 2 is a schematic view of an exploded structure of a battery 1001 according to some embodiments of the present disclosure. The battery 1001 includes a case body 100 and a battery cell 200 accommodated in the case body 100. The case body 100 is configured to provide an accommodation space for the battery cell 200. The case body 100 may have a variety of structures. In some embodiments, the case body 100 may include a first part 101 and a second part 102. The first part 101 and the second part 102 fit with each other. An accommodation space for accommodating the battery cell 200 is defined by the first part 101 and the second part 102 jointly. The second part 102 may has a hollow structure with one end open, and the first part 101 may be a plate-like structure. The first part 101 covers an open side of the second part 102 to allow the first part 101 and the second part 102 to jointly define the accommodation space. Each of the first part 101 and the second part 102 may also be a hollow structure with one side open, and the open side of the first part 101 covers the open side of the second part 102. Of course, the case body 100 formed by the first part 101 and the second part 102 may be in various shapes, such as a cylinder, a cuboid, etc. A plurality of battery cells 200 is connected in parallel or in series or in series and parallel, and then arranged in the case body 100 formed by the first part 101 and the second part 102 fitted with each other.

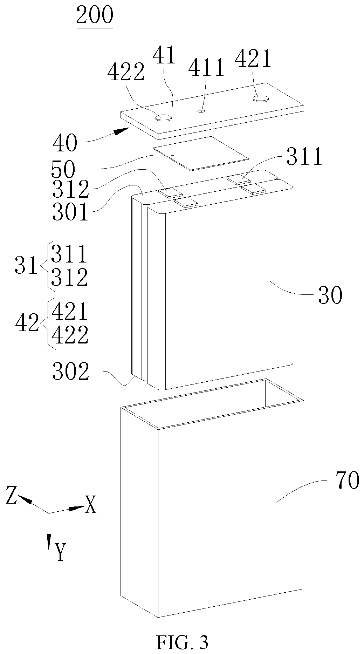

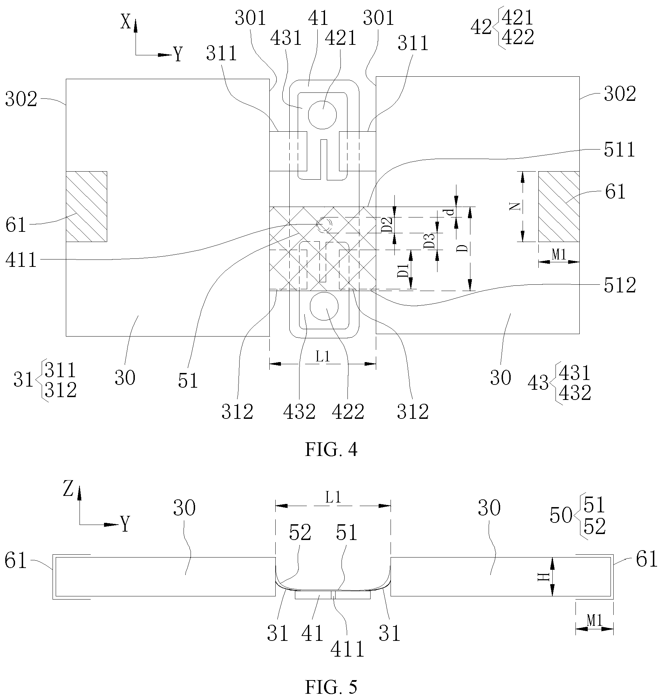

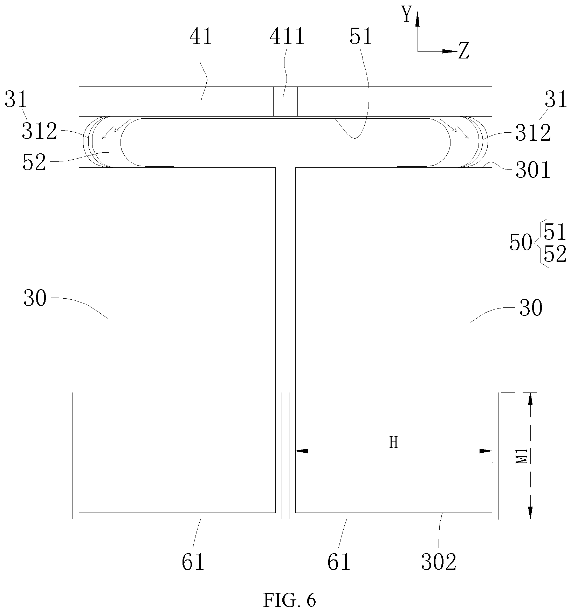

With reference to FIG. 3, FIG. 3 is a schematic view of an exploded structure of a battery cell 200 according to some embodiments of the present disclosure. With reference to FIGS. 4 to 6 together, FIG. 4 is a schematic structural view of a battery cell 20 before cell stacking according to some embodiments of the present disclosure, FIG. 5 is a side view of a structure of the battery cell 200 before cell stacking according to some embodiments of the present disclosure, and FIG. 6 is a side view of a structure of the battery cell 200 after cell stacking according to some embodiments of the present disclosure.

The battery cell 200 includes an electrode assembly 30, an end cover assembly 40 and a shielding assembly 50. The end cover assembly 40 includes an end cover 41. The end cover 41 has a liquid injection hole 411 to facilitate injection of the electrolyte. The shielding assembly 50 covers the liquid injection hole 411. That is, the shielding assembly 50 is disposed at a side of the end cover 41 facing towards the electrode assembly 30 and configured to shield the liquid injection hole 411.

In some embodiments, the battery cell 200 further includes a housing 70, the electrode assembly 30 is mounted into the housing 70, and the end cover 41 covers the housing 70.

In some embodiments, the electrode assembly 30 is provided with two groups of tabs 31 having opposite polarities. The end cover assembly 40 further includes two electrode terminals 42. The two electrode terminals 42 are connected to two groups of tabs 31, respectively. Each of the two electrode terminals 42 is mounted at the end cover 41 and is supported by the end cover 41.

The electrode assembly 30 includes two groups of tabs 31: one group of tabs 31 is a positive electrode tab, and the other group of tabs 31 is a negative electrode tab. One or more positive electrode tabs may be provided at the electrode assembly 30. When one positive electrode tab is provided at the electrode assembly 30, the one positive electrode tab is formed as a group of tabs 31. When a plurality of positive electrode tabs is provided at the electrode assembly 30, these positive electrode tabs are stacked to each other to form a group of tabs 31. One or more negative electrode tabs may be provided at the electrode assembly 30. When one negative electrode tab is provided at the electrode assembly 30, the one negative electrode tab is formed as a group of tabs 31. When a plurality of negative electrode tabs is provided at the electrode assembly 30, these negative electrode tabs are stacked to each other to form a group of tabs 31.

The end cover 41 refers to a component configured to cover an opening of the housing 70 to isolate an internal environment of the battery cell 200 from an external environment. The end cover 41 may have a shape adapted to a shape of the housing 70 to fit with the housing 70 and cover the housing 70. Optionally, the end cover 41 may be made of a material with a certain hardness and strength (such as aluminum alloy). In this way, the end cover 41 is less likely to deform when subjected to extrusion and collision, and therefore the battery cell 200 can have a higher structural strength. Thus, safety performance can also be improved.

The electrode terminal 42 refers to a conductive member disposed at the end cover 41. The electrode terminal 42 is connected to the tab 31 of the electrode assembly 30 to output electric energy of the battery cell 200 or to charge the battery cell 200. The battery cell 200 generally includes two electrode terminals 42. The two electrode terminals 42 are connected to the positive electrode tab and the negative electrode tab of the electrode assembly 30, respectively. One of the two electrode terminals 42 connected to the positive electrode tab is a positive electrode terminal, and the other one of the two electrode terminals 42 connected to the negative electrode tab is a negative electrode terminal. The electrode assembly 30 is connected to the electrode terminal 42 at the end cover 41 to form the battery cell 200. Of course, the battery cell 200 may also include other functional components.

The housing 70 is a component configured to cooperate with the end cover 41 to form an internal environment of the battery cell 200. The formed internal environment may be used to accommodate the electrode assembly 30, the electrolyte, and other components. The housing 70 and the end cover 41 may be components independent from each other. An opening may be defined at the housing 70, and the end cover 41 covers the opening at the opening to form the internal environment of the battery cell 200. The housing 70 may have various shapes and sizes, such as a rectangular shape, a cylindrical shape, and a hexagonal prism shape, etc. Specifically, a shape of the housing 70 may be determined based on a specific shape and size of the battery cell 200. The housing 70 may be of a variety of materials, such as copper, iron, aluminum, stainless steel, aluminum alloy, plastic, etc., and the embodiments of the present disclosure are not specifically limited thereto.

The battery cell 200 may include one or more electrode assemblies 30. When the battery cell 200 includes a plurality of electrode assemblies 30, the plurality of electrode assemblies 30 is divided into two groups, and each of the two groups includes at least one electrode assembly 30. For example, when two electrode assemblies 30 are provided, the two electrode assemblies 30 are divided into two groups. When a number of electrode assemblies 30 is greater than two, at least one of the two groups includes at least two electrode assemblies 30, and the other one of the two groups includes at least one electrode assembly 30. When a number of electrode assemblies 30 is even, a number of electrode assemblies 30 in both groups may be set to be the same.

When battery cell 200 includes two groups of electrode assemblies 30, the two groups of electrode assemblies 30 are unfolded opposite to each other, as illustrated in FIGS. 4 and 5, in order to facilitate the tabs 31 having the same polarities at each of the two groups of electrode assemblies 30 to be connected to the same electrode terminal 42 for easy connection. After each electrode assembly 30 is connected to the corresponding electrode terminal 42, the shielding assembly 50 may be mounted at the end cover 41 such that the shielding assembly 50 covers the liquid injection hole 411 of the end cover 41, and two ends of the shielding assembly 50 are bent to be connected to end surfaces of ends where tabs 31 of two adjacent electrode assemblies 30 are located, respectively. That is, the two ends of the shielding assembly 50 are connected to the end surfaces where the tabs 31 of two electrode assemblies 30 closer to the shielding assembly 50 among these electrode assemblies 30 are located, respectively. In this case, the electrode assemblies 30 need to be mounted into the housing 70 by folding the two groups of electrode assemblies 30 together for the cell stacking, as illustrated in FIG.6, in order to facilitate the mounting of each electrode assembly 30 into the housing 70. A state in which the two groups of electrode assemblies 30 are unfolded opposite to each other is a state before the cell stacking. A state in which the two groups of electrode assemblies 30 are folded is a state after the cell stacking, and a process of folding the two groups of electrode assemblies 30 is called the cell stacking. In addition, when the battery cell 200 includes two groups of electrode assemblies 30, the plurality of electrode assemblies 30 may be integrated during a fabrication of the battery cell 200. The plurality of electrode assemblies 30 may be divided into two groups to facilitate the assembly.

In the embodiment of the present disclosure, the shielding assembly 50 covers the liquid injection hole 411 at the end cover 41. When the electrolyte is injected from the liquid injection hole 411, the shielding assembly 50 blocks the electrolyte. Due to the blocking effect of the shielding assembly 50, the electrolyte directly impacts on the shielding assembly 50. As a result, the shielding assembly 50 withstands the impact force of the injected electrolyte to allow impact energy of the electrolyte to be absorbed by the shielding assembly 50. Moreover, the electrolyte disperses and flows into the housing 70 from a gap between the shielding assembly 50 and the end cover 41, to serve the function in dispersing and buffering the injected electrolyte. Therefore, the electrolyte can be prevented from directly washing over the electrode assembly 30. Thus, the separator can be prevented from being folded over due to the washing over of the electrolyte. In this way, the risk of self-discharge due to the overlapping between the tab and the end surface of the electrode plate is reduced. As a result, the safety is improved and the service life is prolonged.

In some embodiments, the end cover 41 may also be provided with a pressure relief mechanism configured to release an internal pressure when an internal pressure or temperature of the battery cell 200 reaches a threshold. The end cover 41 may also be of a variety of materials, such as copper, iron, aluminum, stainless steel, aluminum alloy, plastic, etc., which are not specifically limited by the embodiments of the present disclosure.

As illustrated in FIG.3, the electrode assembly 30 has a height direction, a width direction, and a thickness direction, in which a Y direction is the height direction of the electrode assembly 30, an X direction is the width direction of the electrode assembly 30, and a Z direction is the thickness direction of the electrode assembly 30.

With reference to FIGS. 3 to 5, for convenience of description, two opposite ends of the electrode assembly 30 are defined as a first end 301 and a second end 302, respectively. The tab 31 is located at the first end 301 of the electrode assembly 30. That is, the first end 301 of the electrode assembly 30 is an end where the tab 31 of the electrode assembly 30 is located. The second end 302 is an end of the electrode assembly 30 opposite to the first end 301, and a direction from the first end 301 to the second end 302 is the above height direction (i.e., the Y direction) of the electrode assembly 30. A surface defined between the first end 301 and the second end 302 of the electrode assembly 30 in the height direction (i.e., the Y direction) and the width direction (i.e., the X direction) of the electrode assembly 30 is a side surface of the electrode assembly 30. Therefore, the electrode assembly 30 has two opposite side surfaces, and a normal direction of the two side surfaces is the thickness direction (i.e., the Z direction) of the electrode assembly 30.

The electrode terminal 42 at the end cover 41 is connected to the tab 31 of the electrode assembly 30, and the end cover 41 covers the housing 70 when fitted. An outer contour of the end cover 41 may be in a shape of rectangular or rectangular-like flat plate. For example, each corner of the end cover 41 may be rounded. As illustrated in FIGS. 3 and 4, a width direction of the end cover 41 is consistent with the thickness direction of the electrode assembly 30, and a length direction of the end cover 41 is consistent with the width direction of the electrode assembly 30. Two sides of the end cover 41 in the length direction are two sides of the end cover 41, respectively. An edge at one of two sides of the end cover 41 is a side edge of the end cover 41. Two ends of the end cover 41 in the length direction are two ends of the end cover 41, respectively. Since the shielding assembly 50 is attached to the end cover 41 in the thickness direction of the electrode assembly 30 (i.e., the width direction of the end cover 41), the width direction of the shielding assembly 50 is consistent with the length direction of the end cover 41.

The shielding assembly 50 has two opposite sides, one side and the other side, respectively, and two opposite side edges. An edge of one side of the shielding assembly 50 is one side edge of the shielding assembly 50, and an edge of the other side of the shielding assembly 50 is the other side edge of the shielding assembly 50. For convenience of description, one side of the shielding assembly 50 is defined as a first side, and the other side of the shielding assembly 50 is defined as a second side. Correspondingly, one side edge of the shielding assembly 50 is defined as a first side edge 511, and the other side edge of the shielding assembly 50 is defined as a second side edge 512.

The electrode assembly 30 is provided with tabs 31 having opposite polarities. When the shielding assembly 50 covers the liquid injection hole 411, the first side edge 511 and the second side edge 512 of the shielding assembly 50 are located at two opposite sides of the liquid injection hole 411, respectively. The electrode assembly 30 is provided with two groups of tabs 31 having opposite polarities. When the liquid injection hole 411 is disposed between the two groups of tabs 31 (i.e., the two groups of tabs 31 are located at the two opposite sides of the liquid injection hole 411, respectively), or the two groups of tabs 31 are located at the same side of the liquid injection hole 411, one group of tabs 31 must be closer to the second side edge 512 than the first side edge 511. For convenience of description, one of the two groups of tabs 31 closer to the first side edge 511 than the second side edge 512 is referred to as a first tab 311, and one of the two groups of tabs 31 closer to the second side edge 512 and farther away from the first side edge 511 is referred to as a second tab 312. In this way, an electrode terminal 42 connected to the first tab 311 may be referred to as a first electrode terminal 421, and an electrode terminal 42 connected to the second tab 312 may be referred to as a second electrode terminal 422 for distinction and description.

In some embodiments, with reference to FIGS. 3 and 4, the shielding assembly 50 may be adhesively connected to the end cover 41. In this way, it is easy to connect the shielding assembly 50 to the end cover 41 to facilitate fixing of the shielding assembly 50, and thus to facilitate the assembling. Moreover, it can well ensure that the shielding assembly 50 covers the liquid injection hole 411 at the end cover 41. That is, an adhesion strength between the shielding assembly 50 and the end cover 41 is set such that the electrolyte injected from the liquid injection hole 411 can impact on a part of the shielding assembly 50, in such a manner that the part is detached from the end cover 41. The adhesion strength between the shielding assembly 50 and the end cover 41 is smaller than a pressure of the electrolyte injected into the liquid injection hole 411. The adhesion strength refers to an adhesive force withstood by a unit adhesive surface. The pressure is a force withstood by a unit area. Since the adhesion strength between the shielding assembly 50 and the end cover 41 is smaller than the pressure of the electrolyte injected into the liquid injection hole 411, when the electrolyte is injected, the impact force of the electrolyte can separate a part of a connection region between the shielding assembly 50 and the end cover 41 to prevent the shielding assembly 50 from blocking the liquid injection hole 411. As such, the electrolyte can flow through these separated regions for easy injection of the electrolyte.

In some embodiments, with reference to FIGS. 3 and 4, the shielding assembly 50 includes a shielding member 51. The shielding member 51 is adhesively connected to the end cover 41 to ensure that the shielding member 51 covers the liquid injection hole 411 at the end cover 41. An adhesion strength between the shielding member 51 and the end cover 41 is set such that the electrolyte injected from the liquid injection hole 411 can impact on a part of the shielding member 51, in such a manner that the part is detached from the end cover 41. The adhesion strength between the shielding member 51 and the end cover 41 is smaller than the pressure of the electrolyte injected into the liquid injection hole 411. When the electrolyte is injected, the impact force of the electrolyte can separate a part of a connection region between the shielding member 51 and the end cover 41 to prevent the shielding member 51 from blocking the liquid injection hole 411. As such, the electrolyte can flow through these separated regions for the easy injection of the electrolyte.

When the shielding assembly 50 includes the shielding member 51, the shielding member 51 is attached to the end cover 41 in the thickness direction of the electrode assembly 30 (i.e., the width direction of the end cover 41), and therefore a width direction of the shielding member 51 is consistent with the length direction of the end cover 41. A length direction of the shielding member 51 is consistent with the length direction of the shielding assembly 50, and the width direction of the shielding member 51 is consistent with the width direction of the shielding assembly 50. The first side of the shielding assembly 50 is also a first side of the shielding member 51, the second side of the shielding assembly 50 is also a second side of the shielding member 51, the first side edge 511 of the shielding assembly 50 is also a first side edge of the shielding member 51, and the second side edge 512 of the shielding assembly 50 is also a second side edge of the shielding member 51.

In some embodiments, the shielding assembly 50 includes a shielding member 51 and a buffer member 52. The buffer member 52 may be mounted at the electrode assembly 30, and the buffer member 52 is configured to support the shielding member 51 to allow the shielding member 51 to be supported at the electrode assembly 30 through the buffer member 52. In this way, the shielding member 51 may be more stably supported. As a result, when electrolyte is injected, an ability of the shielding member 51 to resist the impact force of the electrolyte may be improved to better prevent disengagement of the shielding member 51.

In some embodiments, the buffer member 52 may be an elastic member to elastically support the shielding member 51. Therefore, when the electrolyte is injected and the electrolyte breaks open the shielding member 51 and flows into the housing 70, the shielding member 51 can elastically buffer the electrolyte. When the injection of the electrolyte stops, the shielding member 51 can block the liquid injection hole 411 again to prevent impurities from entering the housing 70.

Understandably, the buffer member 52 may also be a hard member to stably support the shielding member 51 and enhance the ability of the shielding member 51 to withstand the impact of electrolyte.

In some embodiments, with reference to FIGS. 3 and 4, the shielding member 51 has a sheet-like structure, which can reduce the occupied space, improve capacity density of the battery cell, and is easy for the shielding member 51 to be adhesively connected to the end cover 41. Moreover, when the electrolyte impacts on the shielding member 51, the electrolyte can break open a part of the shielding member 51 to facilitate the injection of the electrolyte, and the shielding member 51 can be prevented from being disengaged from the end cover 41. Understandably, the shielding member 51 may use a structure of other shapes such as a plate-like shape.

In some embodiments, with reference to FIGS. 3 and 4, the shielding member 51 may have an elastic structure. That is, the shielding member 51 has an elastic characteristic. Since the shielding member 51 has elasticity, the shielding member 51 can elastically abut against the end cover 41 after being assembled, especially can elastically cover the liquid injection hole 411. When the electrolyte is injected, the shielding member 51 can elastically buffer the electrolyte, to better absorb the impact energy of the electrolyte, and thus to buffer and disperse the electrolyte. As such, the electrolyte is prevented from directly washing over the electrode assembly 30. Thus, the separator can be prevented from folding over due to the washing over of the electrolyte. Since the shielding member 51 is elastically deformed, the injection of electrolyte is facilitated, and efficiency of injecting the electrolyte is improved. Moreover, this structure can also protect the shielding member 51 from being disengaged from the end cover 41. Understandably, the shielding member 51 may also be a flexible film sheet adhesively attached to the end cover 41. When the electrolyte is injected, only a part of the adhesive connection region between the shielding member 51 and the end cover 41 will be broken open by the electrolyte, which prevents the disengagement of the shielding member 51. Moreover, the shielding member 51 may buffer and disperse the injected electrolyte to prevent the electrolyte from washing over the electrode assembly 30 directly.

In some embodiments, with reference to FIGS. 3 and 4, the shielding member 51 may be elastic and adhered to the end cover 41, which facilitates installation of the shielding member 51 during assembly. When the electrolyte is injected, the electrolyte breaks open the shielding member 51 and flows into the housing 70, the shielding member 51 may elastically buffer the electrolyte. When the injection of the electrolyte stops, the shielding member 51 may block the liquid injection hole 411 again to prevent impurities from entering the housing 70.

In some embodiments, the buffer member 52 may have a sheet-like structure to reduce a space occupied by the buffer member 52. Understandably, the buffer member 52 may also be a post-like member or the like.

In some embodiments, when the buffer member 52 is an elastic member, the buffer member 52 may have an elastic sheet-like structure. As such, the buffer member 52 may be bent, and two ends of the buffer member 52 are connected to the shielding member 51 and the electrode assembly 30, respectively, to support the shielding member 51. Understandably, the buffer member 52 may also be an elastic rubber post.

In one embodiment, the shielding assembly 50 includes a shielding member 51 and a buffer member 52. The buffer member 52 is disposed at each of two ends of the shielding member 51 in the length direction of the end cover 41. The buffer member 52 and the shielding member 51 are integrally formed for ease of the manufacturing and the mounting.

In one embodiment, when each of the shielding member 51 and the buffer member 52 has the sheet-like structure, the buffer member 52 and the shielding member 51 may be integrally formed, and the buffer member 52 is disposed at each of the two ends of the shielding member 51 in the length direction of the shielding member 51. That is, the shielding assembly 50 as a whole has the sheet-like structure. Understandably, the shielding member 51 and the buffer member 52 may be separately provided, and then the buffer member 52 is adhesively connected to the shielding member 51.

The shielding assembly 50 as a whole has the sheet-like structure, that is, the buffer member 52 and the shielding member 51 are integrally formed into the sheet-like structure as a whole, which occupies a small space, facilitates the manufacturing and mounting for use, and has a low cost. For example, the shielding member 50 may be a film sheet having an insulating property. For example, the shielding member 50 may be made of a PET (polyethylene glycol terephthalate) resin sheet or other plastic sheets, and therefore a middle portion of the shielding member 50 in the length direction is formed as the shielding member, and the two ends of the shielding member 50 in the length direction are formed as the buffer members 52. For example, the shielding assembly 50 may be obtained by cutting a longer insulation tape. The shielding assembly 50 has a length direction and a width direction. The two ends of the shielding assembly 50 in the length direction are two ends of the shielding assembly 50, respectively. Two sides of the shielding assembly 50 in the length direction are two sides of the shielding assembly 50, respectively. An edge at one side of the shielding assembly 50 is a side edge of the shielding assembly 50. The length direction of the shielding assembly 50 is consistent with the width direction of the end cover 41.

In some embodiments, when a plurality of electrode assemblies 30 are provided and divided into two groups, the buffer members 52 at two opposite ends of the shielding member 51 are bent to be connected to two electrode assemblies 30 adjacent to the liquid injection holes 411, respectively. As such, the shielding member 51 can serve a function in protecting the electrode assemblies 30, especially when the electrolyte is injected, the shielding member 51 can disperse the electrolyte at the edges of the electrode assemblies 30. In this way, the electrolyte is more dispersed, which avoids the washing over of the electrode assembly 30 when the electrolyte is injected. In addition, when the buffer member 52 is elastic, the buffer member 52 needs to be bent towards the electrode assembly 30 in an arc shape to be connected to the electrode assembly 30. As such, the electrode assembly 30 can also serve the function in supporting the shielding member 51. Therefore, the shielding member 51 can elastically abut against the end cover 41 to better cover the liquid injection hole 411, and elastically buffer the injected electrolyte to improve the ability of absorbing the impact of the electrolyte. The two opposite ends of the shielding member 51 are two opposite ends of the shielding member 51 in the length direction, respectively, and also refer to two opposite ends of the shielding member 51 in the width direction of the end cover 41, respectively.

Understandably, when one electrode assembly 30 is provided, the buffer member 52 located at each of two opposite ends of the shielding member 51 is bent to be connected to the electrode assembly 30.

In some embodiments, with reference to FIGS. 3 and 4, when the shielding assembly 50 as a whole has the sheet-like structure, the shielding assembly 50 as a whole may have the elastic sheet-like structure. That is, the shielding assembly 50 has the elastic characteristic. Since the shielding assembly 50 has the elasticity, the shielding member 51 can elastically abut against the end cover 41 after being assembled, especially can elastically cover the liquid injection hole 411. When the electrolyte is injected, the shielding member 51 can elastically buffer the electrolyte, to better absorb the impact energy of the electrolyte, and thus to buffer and disperse the electrolyte. As such, the electrolyte is prevented from directly washing over the electrode assembly 30. Thus, the separator can be prevented from folding over due to the washing over of the electrolyte. Since the shielding assembly 50 is elastically deformed, the injection of electrolyte is facilitated, and the efficiency of injecting the electrolyte is improved. Moreover, this structure can also protect the shielding member 51 from being disengaged from the end cover 41. Understandably, the shielding assembly 50 may also be the flexible film sheet adhesively attached to the end cover 41. When the electrolyte is injected, only the part of the adhesive connection region between the shielding assembly 50 and the end cover 41 will be broken open by the electrolyte, which prevents the disengagement of the shielding assembly 50. Moreover, the shielding assembly 50 may buffer and disperse the injected electrolyte to prevent the electrolyte from washing over the electrode assembly 30 directly.

In some embodiments, with reference to FIGS. 4, 5 and 6, the shielding assembly 50 includes the shielding member 51 and the buffer member 52. When the shielding assembly 50 as a whole has the sheet-like structure, the shielding assembly 50 has a length L, i.e., a sum of a length of each of the shielding member 51 and the buffer members 52 at the two ends of the shielding member 51, and L satisfies: 2mm≤L1+1.5* H-L≤6mm, where L1 represents a spacing between the two groups of electrode assemblies 30 that are unfolded (i.e., a distance between the two groups of electrode assemblies 30 that are unfolded opposite to each other at a same height and parallel to the side edges of the end cover 41), and H represents a thickness of the electrode assembly 30. This length specification of the shielding assembly 50 can ensure that the two ends of the shielding assembly 50 can be connected to the two electrode assemblies 30 adjacent to the liquid injection hole 411, respectively, and cannot allow the two ends of the shielding assembly 50 to exceed side surfaces of corresponding electrode assemblies 30, respectively. In this way, after the two groups of electrode assemblies 30 are stacked to each other, interference caused by the two ends of the shielding assembly abutting against each other can be avoided. For battery cells with a same model, a value of L1 and a value of H are relatively fixed. Understandably, for battery cells with different models, the value of L1 may be set to be different or the same, which is not limited herein. Likewise, for electrode assemblies 30 with different models, the value of H may be set to be different or the same, which is not limited herein. When the length L of the shielding assembly 50 is too large, the two ends of the shielding assembly 50 may abut against each other and interfere with each other after assembly, which is inconvenient for injecting liquid and mitigating the impact of electrolyte. When the length L of the shielding assembly 50 is too small, it is difficult to ensure that the two ends of the shielding assembly 50 are connected to the electrode assembly 30 after assembly, and it is inconvenient to mitigate the impact of the electrolyte.

In one embodiment, L1 ranges from 30mm to 100mm, for example, L1 may be 30mm, 35mm, 40mm, 45mm, 50mm, 55mm, 70mm, 65 mm, 70mm, 75mm, 80mm, 85mm, 90mm, 95mm, 100mm, etc., to ensure that when the two groups of electrode assemblies 30 are unfolded, the spacing is not too small to facilitate the fitting. For example, L1 is smaller than 30mm, and when the two groups of electrode assemblies 30 are unfolded, the spacing is too small, and the fitting is inconvenient. However, when the two groups of electrode assemblies 30 are unfolded, the spacing is too large to facilitate the fitting. For example, L1 is greater than 100mm, the length of the shielding assembly 50 is too long, and it is not conducive to the connection of the tabs 31.

In one embodiment, the thickness H of the electrode assembly 30 ranges from 10mm to 30mm, for example, H may be 10mm, 12mm, 15mm, 18mm, 20mm, 22mm, 25mm, 28mm, 30mm, etc., to make a thickness of an individual electrode assembly 30 appropriate. If the thickness of the electrode assembly 30 is too small, e.g. H is smaller than 10mm, the electrode assembly 30 is too thin, and thus has a small structural strength, which is inconvenient to production and fabrication. However, if the thickness of the electrode assembly 30 is too large, e.g. H is greater than 30mm, the electrode assembly is too thick. As such, the electrode assembly 30 will be loose during the production and fabrication, and it is not conducive to heat dissipation.

In one example, the length of the shielding assembly 50 may be 100mm, the spacing L1 between the two groups of electrode assemblies 30 when unfolded may be 80mm, and the thickness of the electrode assembly 30 may be 17 mm. In another example, the length of the shielding assembly 50 may be 76mm, the spacing L1 between the two groups of electrode assemblies 30 when unfolded may be 52mm, and the thickness of the electrode assemblies 30 may be 20 mm.

In some embodiments, with reference to FIGS. 3 and 4, since the shielding assembly 50 covers the liquid injection hole 411, the first side edge 511 and the second side edge 512 of the shielding assembly 50 are located at the two opposite sides of the liquid injection hole 411, respectively, and a distance from the first side edge 511 of the shielding assembly 50 to the liquid injection hole 411 is smaller than or equal to a distance from the second side edge 512 of the shielding assembly 50 to the liquid injection hole 411. The distance from the first side edge 511 of the shielding assembly 50 to the liquid injection hole 411 is d, where 0<d<20 mm. The distance from the first side edge 511 of the shielding assembly 50 to the liquid injection hole 411 is d. That is, the shielding assembly 50 covers the liquid injection hole 411, and the first side edge 511 of the shielding assembly 50 exceeds an edge of the liquid injection hole 411. A minimum distance that the first side edge 511 of the shielding assembly 50 exceeds the edge of the liquid injection hole 411 is an interference distance. The distance d that the first side edge 511 of the shielding assembly 50 exceeds the edge of the liquid injection hole 411 falls within 0<d<20 mm. For example, the distance d may be 1mm, 2mm, 3mm, 4mm, 5mm, 6mm, 7mm, 8mm, 9 mm, 10mm, 11mm, 12mm, 13mm, 14mm, 15mm, 16mm, 17mm, 18mm, 19mm, etc. Therefore, when the electrolyte is injected, a certain force is required to allow the electrolyte to break open the first side edge 511 of the shielding assembly 50. In this way, the buffering capacity of the shielding assembly 50 to the electrolyte is ensured to better disperse the electrolyte and prevent the electrolyte from directly washing over the electrode assembly 30. When the distance d is too small, for example, the distance d is smaller than or equal to 0, it is difficult to ensure that the shielding assembly 50 completely covers the liquid injection hole 411. As such, when the electrolyte is injected, the electrolyte will rush out from the first side edge 511 of the shielding assembly 50 and thus wash over the electrode assembly 30. When the distance d is too large, for example, the distance d is greater than 20mm, an excessive force is required to allow the electrolyte to break open the shielding assembly 50 and to flow out from the first side edge 511 of the shielding assembly 50, resulting in a decrease in the efficiency of injecting the electrolyte. The distance from the first side edge 511 of the shielding assembly 50 to the liquid injection hole 411 is smaller than or equal to the distance from the second side edge 512 of the shielding assembly 50 to the liquid injection hole 411, a more force is required to allow the electrolyte to break open the second side edge 512 of the shielding assembly 50. In this way, the tab 31 adjacent to the second side edge 512 can be better protected.

In the above embodiments, when the shielding assembly 50 includes the shielding member 51, the first side edge 511 of the shielding assembly 50 is the first side edge of the shielding member 51, and the second side edge 512 of the shielding assembly 50 is the second side edge of the shielding member 51.

In some embodiments, with reference to FIGS. 4 and 6, the second side edge of the shielding assembly 50 is attached to an adjacent tab 31, and the first side edge 511 of the shielding assembly 50 is spaced apart from another tab. That is, the second side edge 512 of the shielding assembly 50 is attached to one of the tabs 31 adjacent to the second side edge 512, i.e., the second side edge 512 of the shielding assembly 50 is attached to the second tab 312. By attaching the second side edge 512 of the shielding assembly 50 to the second tab 312, the injected electrolyte can break open the shielding assembly 50, and a resistance from the second side edge 512 of the shielding assembly 50 to the second tab 312 is greater. In this way, the impact force of the electrolyte on the second tab 312 can be reduced. Therefore, when the electrolyte reaching the second tab 312 flows along the second tab 312 to the electrode assembly 30, the impact force of the electrolyte is very small. Thus, the folding over of the separator due to the washing over of the electrolyte can be better avoided.

In some embodiments, the shielding assembly 50 covers the tab 31 adjacent the second side edge 512 of the shielding assembly 50. That is, the shielding assembly 50 covers the second tab 312, which not only serves the function in protecting the second tab 312, but also prevents a connection between the second tab 312 and the second electrode terminal 422 from affecting the electrode assembly 30. For example, there are often burr welding slags at a welding joint between the second tab 312 and the second electrode terminal 422, and the shielding assembly 50 covers the second tab 312 can allow the shielding assembly 50 to cover these burr welding slag. As a result, these burr welding slags are prevented from damaging the electrode assembly 30 and the safety is improved.

In the above embodiments, the shielding assembly 50 has a width D, and D satisfies: D=D1+D2+d+D3, where D1 represents a width of the tab 31 covered by the shielding assembly 50, that is, D1 represents a width of the second tab 312, D2 represents a diameter of the liquid injection hole 411, and D3 represents a distance from a tab 31 adjacent to the shielding assembly 50 to the liquid injection hole 411. In FIG. 4, D3 represents a minimum distance from the second tab 312 to an edge of the liquid injection hole. Generally speaking, for the battery cells 200 with the different models, the distance from the second tab 312 to the liquid injection hole 411 may be different. For the battery cells 200 with the same model, the distance from the second tab 312 to the liquid injection hole 411 may be relatively fixed. A distance from the second tab 312 to the liquid injection hole 411 in a conventional battery cell 200 ranges from 3 mm to 5 mm. d represents the above distance from the first side edge 511 of the shielding assembly 50 to the liquid injection hole 411. Using the shielding assembly 50 of this width can ensure that the shielding assembly 50 well covers the liquid injection hole 411 and ensure the distance from the first side edge 511 of the shielding assembly 50 to the liquid injection hole 411 to better buffer the injected electrolyte. In addition, the resistance of the electrolyte flowing out from the second side edge 512 of the shielding assembly 50 is relatively large, in this way, only a small amount of electrolyte can flow to the second tab 312 to serve a function in protecting the second tab 312 and the electrode assembly 30.

After the electrode assembly 30 is formed into molding and before compaction, the electrode plate and the separator are in a relatively free state, and the electrode assembly 30 is in a fluffy state. Especially in an electrode assembly 30 formed through winding, an opening may occur between an innermost electrode plate and the separator. If the electrode assembly 30 is improperly transferred in this state, the electrode plate may easily slip and the separator may fold over.

In some embodiments, with reference to FIGS. 4, 5 and 6, the battery cell 200 also includes an insulation adhesive tape 61. At least one piece of insulation adhesive tape 61 is pasted onto each of the second ends 302 of each group of electrode assemblies 30. Two ends of the insulation adhesive tape 61 are attached to two opposite side surfaces of a corresponding group of electrode assemblies 30, respectively. That is, the two ends of the insulation adhesive tape 61 are attached to the two opposite side surfaces of the corresponding group of electrode assemblies 30, respectively. When a group of electrode assemblies includes one electrode assembly 30, the insulation adhesive tape 61 is attached to each of two opposite side surfaces of this electrode assembly 30. When a group of electrode assemblies includes a plurality of electrode assemblies 30 and these electrode assemblies 30 are stacked to each other, the insulation adhesive tape 61 is adhesively connected to each of end surfaces of the second ends 302 of the plurality of electrode assemblies 30 among this group of electrode assemblies, and two ends of the insulation adhesive tape 61 are attached to two outermost side surfaces of the stacked group of electrode assemblies, respectively.

The insulation adhesive tape 61 refers to an adhesive tape having an insulation property. For example, the insulation adhesive tape 61 may be a resin adhesive tape or other plastic adhesive tapes. The insulation adhesive tape 61 has a length direction and a width direction. Two ends in the length direction of the insulation adhesive tape 61 are the two ends of the insulation adhesive tape 61, respectively. Two sides in the length direction of the insulation adhesive tape 61 are two sides of the insulation adhesive tape 61, respectively. An edge at a side of the insulation adhesive tape 61 is a side edge in the length direction of the insulation adhesive tape 61.

Since at least one piece of insulation adhesive tape 61 is pasted onto each of the second ends 302 of each group of electrode assemblies 30, each of the second ends 302 of each group of electrode assemblies 30 can be bound by the insulation adhesive tape 61. In this way, the separators of each group of electrode assemblies 30 can be bound between corresponding electrode plates to better prevent the separators from folding over. Moreover, the two groups of electrode assemblies 30 are easily folded to be stacked to each other for easy assembly.

In some embodiments, a piece of insulation adhesive tape 61 is pasted onto each of the second ends 302 of each group of electrode assemblies 30 for easy mounting. Understandably, each of the second ends 302 of each group of electrode assemblies 30 may be pasted with two or three pieces of insulation adhesive tape 61.

In some embodiments, with reference to FIGS. 4, 5 and 6, a length of the insulation adhesive tape 61 attached to a side surface of a corresponding electrode assembly 30 is greater than 3mm. For example, a length of the insulation adhesive tape 61 attached to a side surface of a corresponding electrode assembly 30 is M1, an overall thickness of a group of electrode assemblies 30 is M2, and a length of the insulation adhesive tape 61 is M, then M=M2+2*M1, where M1>3mm. In this way, an adhesive strength between an end of the insulation adhesive tape 61 and the electrode assembly 30 can be ensured to better bind the second end 302 of the electrode assembly 30. For example, when one electrode assembly 30 has a thickness H and a group of electrode assemblies only includes one electrode assembly 30, M2=H. When one electrode assembly 30 has a thickness H and a group of electrode assemblies only includes P electrode assemblies 30, M2=P*H.

In some embodiments, when each group of electrode assemblies only includes one electrode assembly 30, a corresponding insulation adhesive tape 61 at this electrode assembly 30 is attached to a second end 302 of this electrode assembly 30, and two ends of the insulation adhesive tape 61 are attached to two opposite side surfaces of this electrode assembly 30, respectively. In this case, the thickness M2 of the above-mentioned group of electrode assemblies 30 is a thickness of the electrode assembly 30.

In some embodiments, with reference to FIGS. 4, 5 and 6, a width N of each insulation adhesive tape 61 is smaller than 50mm. In this way, when mounting the insulation adhesive tape 61, the insulation adhesive tape 61 can be easily pasted, and a covering width of the insulation adhesive tape 61 attached to the electrode assembly 30 can be easily controlled.

In some embodiments, with reference to FIG. 4, the battery cell 200 further includes two adapter sheets 43. The two adapter sheets 43 correspond to the two electrode terminals 42, respectively. Each of the two adapter sheet 43 is connected to the corresponding one of the two electrode terminals 42, and each of the two adapter sheet 43 is connected to a corresponding one of the tabs 31. That is, each of the tabs 31 is connected to the corresponding one of the two electrode terminals 42 by the adapter sheet 43, to facilitate a connection between the tab 31 and the electrode terminal 42, and to enable the connection to be more stable. For ease of description, an adapter sheet 43 connected to the first electrode terminal 421 is called a first adapter sheet 431, and the first tab 311 is connected to the first adapter sheet 431; and an adapter sheet 43 connected to the second electrode terminal 422 is called a second adapter sheet 432, and the second tab 312 is connected to the second adapter sheet 432.

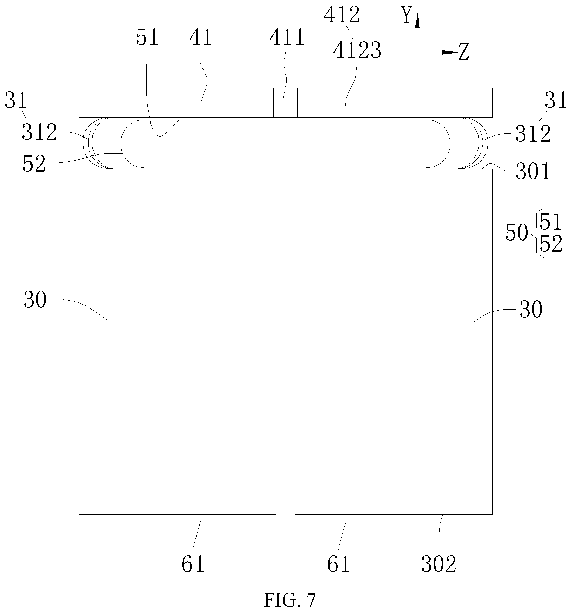

With reference to FIG. 7, FIG. 7 is a side view of a structure of a battery cell 200 after cell stacking according to some embodiments of the present disclosure. In these embodiments, the end cover 41 has a flow guide groove 412 defined at a surface of the end cover 41 facing towards the shielding assembly 50. The flow guide groove 412 has an end in communication with the liquid injection hole 411, and the shielding assembly 50 covers at least a part of the flow guide groove 412. The flow guide groove 412 is a groove defined at a surface of the end cover 41 at which the shielding assembly 50 is disposed. Since the end of the flow guide groove 412 is in communication with the liquid injection hole 411, a part of the flow guide groove 412 covered by the shielding assembly 50 is formed into a channel. When the electrolyte is injected, after the shielding assembly 50 buffers the electrolyte, the electrolyte can be diverted to flow into the flow guide groove 412. The electrolyte is guided and dispersed to a predetermined position through the flow guide groove 412, which facilitates the injection of the electrolyte and improves the efficiency in injecting the electrolyte. In addition, since the shielding assembly 50 withstands the impact of injecting the electrolyte at the liquid injection hole 411, absorbs the impact energy of the electrolyte at the liquid injection hole 411, and buffers the electrolyte, an impact force of the electrolyte flowing out from the flow guide groove 412 is very small. Therefore, the folding over of the separator caused by the electrolyte washing over the electrode assembly 30 can be avoided.

In the above embodiments, when the shielding assembly 50 includes the shielding member 51, the flow guide groove 412 is defined at the shielding member 51.

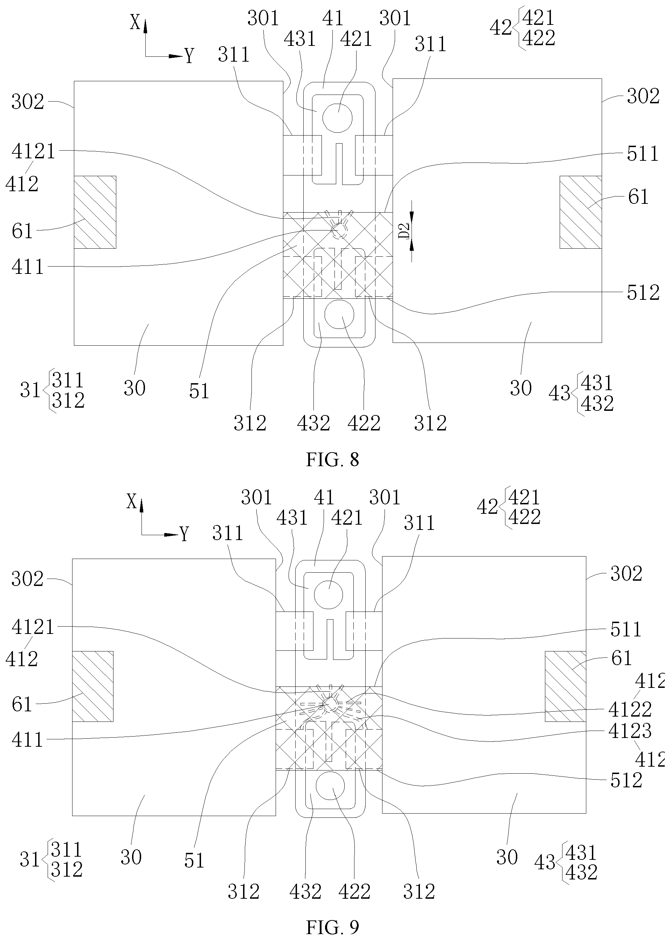

With reference to FIG. 8, FIG. 8 is a schematic structural view of a battery cell 200 before cell stacking according to some embodiments of the present disclosure. In these embodiments, the flow guide groove 412 includes a first flow guide groove 4121. The first flow guide groove 4121 has an end in communication with the liquid injection hole 411 and another end extending out of a side of the shielding assembly 51 facing away from an adjacent tab 31. That is, the other end of the first flow guide groove 4121 extends out of a side of the shielding assembly 51 facing away from an adjacent second tab 312, i.e., the other end of the first flow guide groove 4121 extends out of the second side edge 512 of the shielding assembly 51. By providing the first flow guide groove 4121, when the electrolyte is injected, more electrolyte can be guided to flow out from a side where the second side edge 512 of the shielding assembly 51 is located, to facilitate the injection of the electrolyte and prevent the impact force of the electrolyte from breaking open a region between the liquid injection hole 411 and the second tab 312 that is between the shielding assembly 51 and the end cover 41 when the electrolyte is injected. In this case, the impact force is relatively large, which will cause a larger impact on the second tab 312. However, by providing the first flow guide groove 4121, a force, with which the electrolyte breaks open the shielding assembly 51 in the region between the liquid injection hole 411 and the second tab 312, is less, thereby reducing the impact and an effect on the second tab 312.

In the above embodiments, when the shielding assembly 50 includes the shielding member 51, the first flow guide groove 4121 is defined at the shielding member 51.

In some embodiments, one first flow guide groove 4121 may be provided. Of course, a number of the first flow guide grooves 4121 may also be a plurality, which is not limited herein.

With reference to FIG. 9, FIG. 9 is a schematic structural view of a battery cell 200 before cell stacking according to some embodiments of the present disclosure. In these embodiments, the flow guide groove 412 includes a second flow guide groove 4122. The second flow guide groove 4122 has an end in communication with the liquid injection hole 411 and another end adjacent to a side edge of the end cover 41. By providing the second flow guide groove 4122, when the electrolyte is injected, the electrolyte can be guided to flow near the side edge of the end cover 41, and then to break open a shielding assembly 50 between the other end of the second flow guide groove 4122 and the corresponding side edge of the end cover 41 to further absorb the impact energy of the electrolyte. In this way, the impact force of the electrolyte is reduced to disperse the electrolyte. As a result, it is easy to inject the electrolyte and also easy for the electrode assembly 30 to absorb the electrolyte more evenly.

In the above embodiments, when the shielding assembly 50 includes the shielding member 51, the second flow guide groove 4122 is disposed at the shielding member 51.

In some embodiments, the second flow guide groove 4122 has an end in communication with the liquid injection hole 411 and another end extending to a side edge of the end cover 41. In this way, when the electrolyte is injected, the electrolyte can be guided to flow to the side edge of the end cover 41 to disperse the electrolyte. As a result, it is easy to inject the electrolyte and also easy for the electrode assembly 30 to absorb the electrolyte more evenly.

In some embodiments, with continued reference to FIG. 7, the flow guide groove 412 includes a third flow guide groove 4123. The third flow guide groove 4123 has an end in communication with the liquid injection hole 411 and another end extending to a tab 31 adjacent to the shielding assembly 50. That is, when the first side edge 511 of the shielding assembly 50 is spaced apart from the first tab 311, and the second side edge 511 of the shielding assembly 50 is attached to the second tab 312, the other end of the third flow guide groove 4123 extends to the second tab 312. By providing the third flow guide groove 4123, when the electrolyte is injected, the electrolyte can be guided to flow to the second tab 312 to disperse the electrolyte. As a result, it is easy to inject the electrolyte and also easy for the electrode assembly 30 to absorb the electrolyte more evenly.

In the above embodiments, when the shielding assembly 50 includes the shielding member 51, the third flow guide groove 4123 is disposed at the shielding member 51. The first side edge 511 of the shielding assembly 50 is the first side edge of the shielding member 51, and the second side edge 512 of the shielding assembly 50 is the second side edge of the shielding member 51.

In some embodiments, with reference to FIG. 9, the first flow guide groove 4121, the second flow guide groove 4122, and the third flow guide groove 4123 may be simultaneously disposed at the end cover 41 to better disperse the electrolyte and improve the efficiency of injecting the electrolyte. Understandably, only one or two of the first flow guide groove 4121, the second flow guide groove 4122, and the third flow guide groove 4123 may be disposed at the end cover 41.

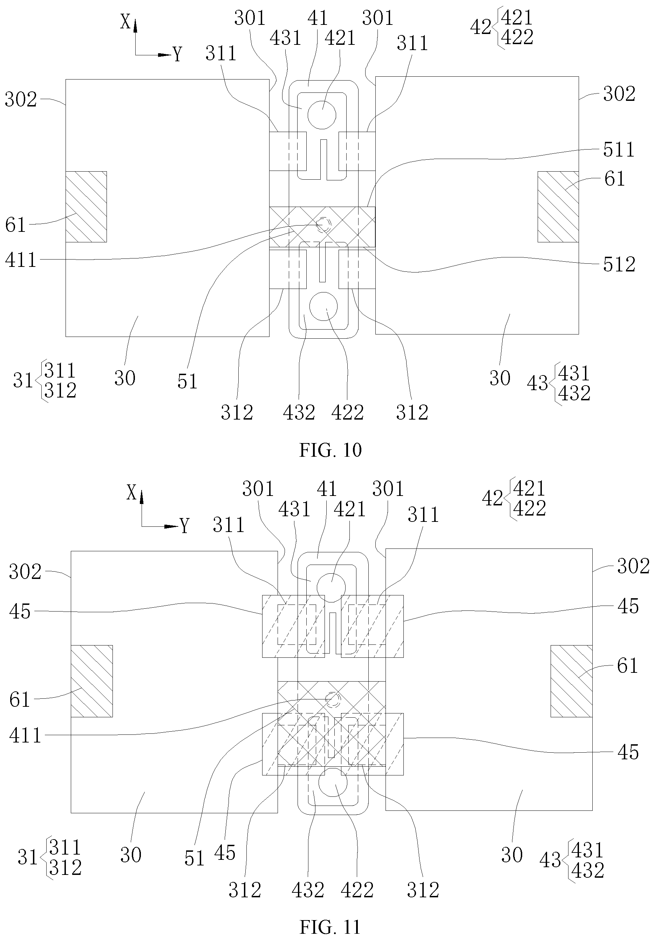

With reference to FIG. 10, FIG. 10 is a schematic structural view of a battery cell 200 before cell stacking according to some embodiments of the present disclosure. In these embodiments, the second side edge 512 of the shielding assembly 50 is spaced apart from the second tab 312. This structure can use the shielding assembly 50 having a smaller width. Moreover, when the electrolyte is injected, and after the shielding assembly 50 absorbs the impact force of the electrolyte at the liquid injection hole 411, the electrolyte will flow more from two opposite side edge of the shielding assembly 50.

With reference to FIG. 11, FIG. 11 is a schematic structural view of a battery cell 200 before cell stacking according to some embodiments of the present disclosure. In these embodiments, a connection region between each of the tabs 31 and the corresponding adapter sheet 43 is covered with an insulation sheet 45. Covering the connection region between the tab 31 and the adapter sheet 43 with the insulation sheet 45 can protect the connection between the tab 31 and the adapter sheet 43 and prevent the connection between the tab 31 and the adapter sheet 43 from affecting the electrode assembly 30. In this way, safety of fabricating the battery 1001 is improved. For example, there are often burr welding slags at a welding joint between the tab 31 and the adapter sheet 43. However, by covering this region with the insulation sheet 45 can prevent the burr welding slags in welding joint between the tab 31 and the adapter sheet 43 from damaging the electrode assembly 30 to improve the safety.

The insulation sheet 45 refers to an adhesive sheet having an insulation property. For example, the insulation sheet 45 may be a resin adhesive sheet or other plastic adhesive sheets.

In some embodiments, when the shielding assembly 50 covers the second tab 312, the shielding assembly 50 is attached to an insulation sheet 45 corresponding to the second tab 312. In this way, the second tab 312 can be better protected by the insulation sheet 45.

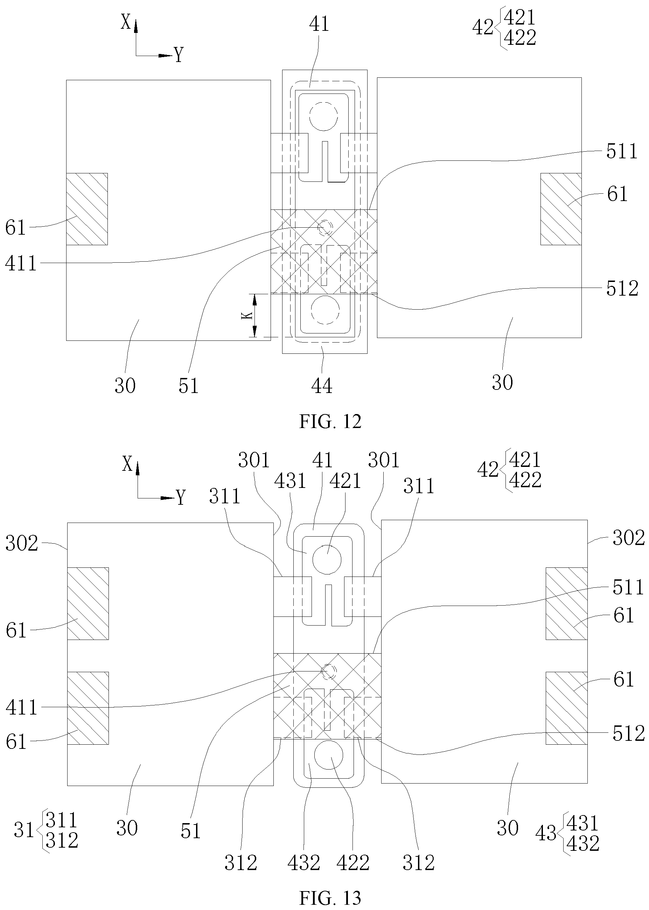

With reference to FIG. 12, FIG. 12 is a schematic structural view of a battery cell 200 before cell stacking according to some embodiments of the present disclosure. In these embodiments, the end cover assembly 40 further includes a separation member 44 at which the end cover 41 is mounted. The end cover 41 is supported by the separation member 44, and the separation member 44 may be configured to isolate an electrical connection component inside the housing 70 from the end cover 41 to reduce the risk of the short circuit. For example, the separation member 44 may be made of plastic, rubber, etc.

The separation member 44 has a width direction consistent with the width direction of the end cover 41 and a length direction consistent with the length direction of the end cover 41. Two ends of the separation member 44 in the length direction are two ends of the separation member 44, respectively.

In some embodiments, generally speaking, the separation member 44 is configured to support the edge of the end cover 41 and protrude from a surface of the end cover 41 facing towards the electrode assembly 30. The shielding assembly 50 is spaced apart from the separation member 44. In this way, when the electrode assembly 30 is fitted, the separation member 44 cannot push the shielding assembly 50 up, such that the shielding assembly 50 can be well attached to the end cover 41.

In some embodiments, a distance K between the side edge of the shielding assembly 50 and an end of the separation member 44 close to this shielding assembly 50 is greater than 3 mm. Therefore, when the electrode assembly 30 is mounted, it can be ensured that the separation member 44 cannot push the shielding assembly 50 up, such that the shielding assembly 50 can be well attached to the end cover 41.

With reference to FIG. 13, FIG. 13 is a schematic structural view of a battery cell 200 before cell stacking according to some embodiments of the present disclosure. In these embodiments, two pieces of insulation adhesive tape 61 may be pasted onto each of the second ends 302 of each group of electrode assemblies 30. Providing the two pieces of insulation adhesive tape 61 can bind the second end 302 of the electrode assembly 30 more stably and bind the separator between the electrode plates to better avoid folding over of the separator. Understandably, each of the second ends 302 of each group of electrode assemblies 30 may be pasted with three, four, or other pieces of insulation adhesive tape 61.

In some embodiments, a sum of widths of the insulation adhesive tape 61 at each group of electrode assemblies 30 is smaller than a width of the electrode assembly 30. The sum of the widths of the insulation adhesive tape 61 is set to be smaller than the width of the electrode assembly 30. As such, the insulation adhesive tape 61 cannot completely cover the second end 302 of the electrode assembly 30. As a result, a region of the second end 302 of the electrode assembly 30 other than the region of the insulation adhesive tape 61 can allow the electrolyte to enter the electrode assembly 30 to facilitate the electrode assembly 30 to absorb the electrolyte.

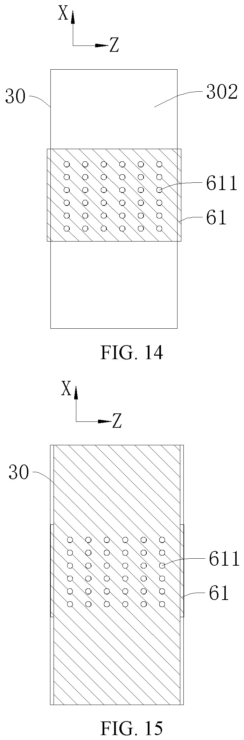

With reference to FIG. 14, FIG. 14 is a schematic structural view of an electrode assembly 30 in a battery cell 200 according to some embodiments of the present disclosure. The insulation adhesive tape 61 illustrated in FIG. 14 covers a region of an end surface of the second end 302 of the electrode assembly 30. In these embodiments, the insulation adhesive tape 61 has a plurality of open pores 611 defined at a region of the insulation adhesive tape 61 corresponding to the end surface of the second end 302 of the electrode assembly 30. By providing the open pores 611 can help the injected electrolyte to enter the electrode assembly 30, and help the electrode assembly 30 to absorb the electrolyte.

In some embodiments, the insulation adhesive tape 61 covers a part of the end surface of the second end 302 of the electrode assembly 30. As such, the region of the second end 302 of the electrode assembly 30 other than the region of the insulation adhesive tape 61 can allow the electrolyte to enter the electrode assembly 30. Moreover, providing the open pore 611 can also allow the electrolyte to enter the electrode assembly 30, which can help the electrode assembly 30 to absorb the electrolyte.

With reference to FIG. 15, FIG. 15 is a schematic structural view of an electrode assembly 30 in a battery cell 200 according to some embodiments of the present disclosure. In these embodiments, the insulation adhesive tape 61 covers the second end 302 of the electrode assembly 30, and the insulation adhesive tape 61 has a plurality of open pores 611 defined at a region of the insulation adhesive tape 61 corresponding to the end surface of the second end 302 of the electrode assembly 30. As such, the second end 302 of the electrode assembly 30 can be bound more stably, and the separator can be bound between the electrode plates to better avoid the folding over of the separator.

In some embodiments, at a position of the insulation adhesive tape 61 corresponding to the end surface of the second end 302 of the electrode assembly 30, an open pore 611 is defined at only a part of the position to ensure a good structural strength of the insulation adhesive tape 61, and thus to bind the second end 302 of the electrode assembly 30 more stably.

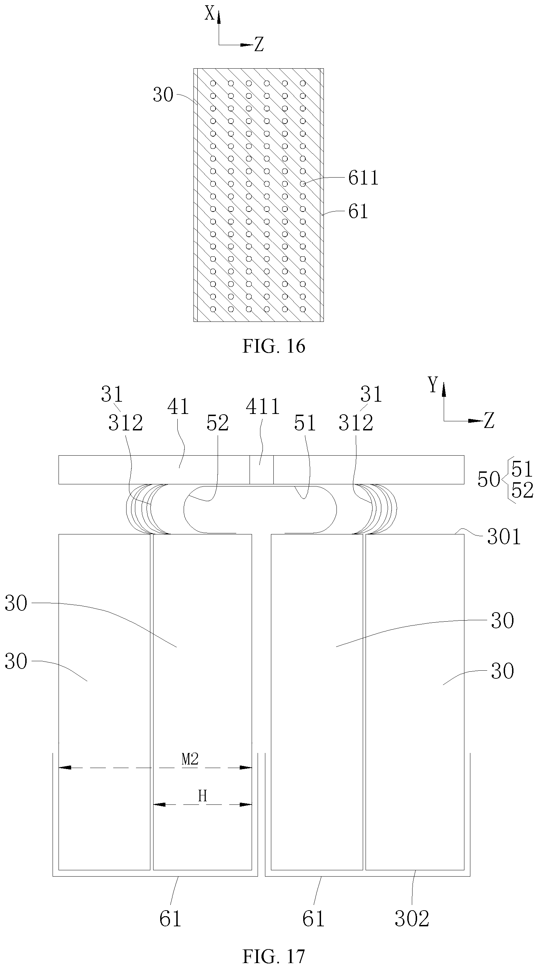

With reference to FIG. 16, FIG. 16 is a schematic structural view of an electrode assembly 30 in a battery cell 200 according to some embodiments of the present disclosure. In these embodiments, the insulation adhesive tape 61 has open pores 611 distributed throughout a region of the insulation adhesive tape 61 corresponding to the end surface of the second end 302 of the electrode assembly 30, to improve the ability of the electrolyte to enter the electrode assembly 30, and thus to facilitate the electrode assembly 30 to absorb the electrolyte.

With reference to FIG. 17, FIG. 17 is a side view of a structure of a battery cell 200 after cell stacking according to some embodiments of the present disclosure. In these embodiments, the battery cell 200 may include a plurality of electrode assemblies 30. These electrode assemblies 30 are divided into two groups. When each of the two groups of electrode assemblies includes a plurality of electrode assemblies 30, the plurality of electrode assemblies 30 are stacked to each other, the insulation adhesive tape 61 is adhesively connected to each of end surfaces of second ends 302 of the plurality of electrode assemblies 30 in each of the two groups, and two ends of the insulation adhesive tape 61 are attached to two outermost side surfaces of the stacked corresponding group of electrode assemblies, respectively. This structure can bind the second ends 302 of each of the two groups of electrode assemblies, and facilitates integration of each of the two groups of electrode assemblies as well as the folding and the cell stacking of the two groups of electrode assemblies.

In the above embodiments, each group of electrode assemblies includes two electrode assemblies 30. Understandably, each group of electrode assemblies may include three, four, etc., electrode assemblies 30, which is not limited herein.

Understandably, in some embodiments, when each group of electrode assemblies includes a plurality of electrode assemblies 30, the insulation adhesive tape 61 may also be individually pasted onto each of the plurality of electrode assemblies 30 to bind a second end 302 of each of the plurality of electrode assemblies 30 by the insulation adhesive tape 61. In this way, a separator at the second end 302 of the electrode assembly 30 can be prevented from folding over when the electrode assembly 30 is moved.

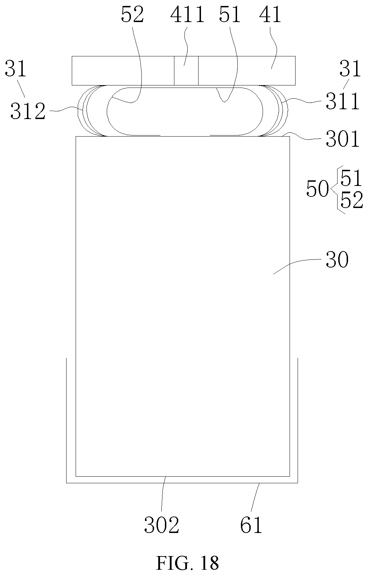

With reference to FIG. 18, FIG. 18 is a side view of a structure of a battery cell 200 according to some embodiments of the present disclosure. In these embodiments, the battery cell 200 includes only one electrode assembly 30. Alternatively, when the battery cell 200 includes a plurality of electrode assemblies 30, the plurality of electrode assemblies can be stacked to form a whole, which is then regarded as a single electrode assembly 30 as a whole. When one electrode assembly 30 is provided, the shielding assembly 50 covers the liquid injection hole 411 of the end cover 41, and the two ends of the shielding assembly 50 are connected to two sides of an end surface of a first end 301 of this electrode assembly 30, respectively. As such, when the electrolyte is injected, the shielding assembly 50 can also buffer and disperse the injected electrolyte, to prevent the electrolyte from directly washing over the electrode assembly 30, and thus to prevent the folding over of the separator caused by the impact of the electrolyte.

In the above embodiments, the shielding assembly 50 includes a shielding member 51 and a buffering member 52. When the shielding assembly 50 as a whole has a sheet-like structure, the shielding member 51 covers the liquid injection hole 411 of the end cover 41, and two buffer members 52 at two ends of the shielding member 51 are bent to be connected to the two sides of the end surface of the first end 301 of this electrode assembly 30, respectively.

In some embodiments, when the battery cell 200 only includes one electrode assembly 30, at least one piece of insulation adhesive tape 61 may be pasted onto a second end 302 of this electrode assembly 30, and two ends of the insulation adhesive tape 61 may be attached to two opposite side surfaces of this electrode assembly 30 to bind the second end 302 of this electrode assembly 30 by the insulation adhesive tape 61. In this way, the separator at the second end 302 of the electrode assembly 30 can be prevented from folding over.

According to some embodiments of the present disclosure, the present disclosure further provides a battery. The battery includes the battery cell described in any of the above solutions.

According to some embodiments of the present disclosure, the present disclosure further provides an electric device. The electric device includes the battery described in any of the above solutions.

The electric device may be any device or system that uses the above-mentioned battery.

At last, it should be noted that, the above embodiments are only used to illustrate, rather than to limit, the technical solutions of the present disclosure. Although the present disclosure has been described in detail with reference to the above embodiments, those skilled in the art should understand that modifications may be made to the technical solutions described in the above embodiments, or equivalent replacements may be made to some or all of the technical features of the technical solutions described in the above embodiments. However, these modifications or replacements do not cause the essence of corresponding technical solutions to deviate from the scope of the technical solutions of the embodiments of the present disclosure, and shall be included in the scope of the claims and the specification of the present disclosure. In particular, the technical features mentioned in the various embodiments can be combined in any way as long as there are no structural conflicts. The present disclosure is not limited to the specific embodiments disclosed herein, but includes all technical solutions falling within the scope of the claims.

## Claims

1. A battery cell, comprising:
an electrode assembly;
an end cover assembly comprising an end cover, the end cover having a liquid injection hole; and
a shielding assembly disposed at a side of the end cover facing towards the electrode assembly and configured to cover the liquid injection hole.

2. The battery cell according to claim 1, wherein the shielding assembly is adhesively connected to the end cover to allow an electrolyte injected from the liquid injection hole to impact on a part of the shielding assembly, in such a manner that the part is detached from the end cover.

3. The battery cell according to claim 1 or 2, wherein the shielding assembly comprises a shielding member covering the liquid injection hole and a buffer member supporting the shielding member, the buffer member being connected to the electrode assembly.

4. The battery cell according to claim 3, wherein the buffer member is elastic.

5. The battery cell according to claim 3 or 4, wherein the shielding member has a sheet-like structure.

6. The battery cell according to claim 5, wherein the shielding member is elastic.

7. The battery cell according to any one of claims 3 to 6, wherein the buffer member is disposed at each of two opposite ends of the shielding member in a width direction of the end cover, the buffer member and the shielding member being integrally formed into a sheet-like structure.

8. The battery cell according to claim 7, wherein the buffer member is bent to be connected to the electrode assembly.

9. The battery cell according to claim 7, wherein the battery cell comprises a plurality of electrode assemblies divided into two groups, the buffer members being bent to be connected to two electrode assemblies adjacent to the liquid injection hole.

10. The battery cell according to claim 9, wherein the shielding assembly has a length L, L satisfying: 2mm≤L1+1.5*H-L≤6mm, where L1 represents a spacing between the two groups of electrode assemblies that are unfolded at a same height and parallel to a side edge of the end cover, and H represents a thickness of the electrode assembly.

11. The battery cell according to any one of claims 1 to 10, wherein the shielding assembly has a first side edge and a second side edge opposite to the first side edge in a length direction of the end cover, the first side edge and the second side edge being located at two opposite sides of the liquid injection hole, respectively, a distance from the first side edge to the liquid injection hole being smaller than or equal to a distance from the second side edge to the liquid injection hole, and the distance from the first side edge to the liquid injection hole being d, where 0<d<20mm.

12. The battery cell according to claim 11, wherein the electrode assembly is provided with tabs having opposite polarities, the second side edge of the shielding assembly being attached to one of the tabs adjacent to the second side edge, and the first side edge of the shielding assembly being spaced apart from another one of the tabs.

13. The battery cell according to any one of claims 1 to 11, wherein the end cover has a flow guide groove defined at a surface of the end cover facing towards the shielding assembly, the flow guide groove having an end in communication with the liquid injection hole, and the shielding assembly covering at least a part of the flow guide groove.

14. The battery cell according to claim 13, wherein the flow guide groove comprises a first flow guide groove, the first flow guide groove having an end in communication with the liquid injection hole and another end extending out of a side of the shielding assembly in a length direction of the end cover.

15. The battery cell according to claim 13 or 14, wherein the flow guide groove comprises a second flow guide groove, the second flow guide groove having an end in communication with the liquid injection hole, and another end adjacent to a side edge of the end cover in a width direction of the end cover or another end extending to the side edge of the end cover in the width direction.

16. The battery cell according to any one of claims 1 to 11 and 13 to 15, wherein:
the electrode assembly is provided with tabs having opposite polarities;
the end cover assembly further comprises electrode terminals connected to the tabs having the opposite polarities, respectively, the electrode terminals being mounted at the end cover; and
the battery cell further comprises adapter sheets connected to the electrode terminals, respectively, each of the adapter sheets being connected to a corresponding one of the tabs, and a connection region between each of the tabs and the corresponding adapter sheet being covered with an insulation sheet.

17. The battery cell according to any one of claims 1 to 16, wherein the end cover assembly further comprises a separation member supporting the end cover, the shielding assembly being spaced apart from the separation member.

18. The battery cell according to claim 17, wherein a distance between a side edge of the shielding assembly and an end of the separation member close to the shielding assembly is greater than 3 mm.

19. A battery, comprising the battery cell according to any one of claims 1 to 18.

20. An electric device, comprising the battery according to claim 19.
